Europäisches Patentamt

European Patent Office

Office européen des brevets

(19)

(11) Numéro de publication : **0 372 298 B1**

(12) **FASCICULE DE BREVET EUROPEEN**

(45) Date de publication du fascicule du brevet :
08.07.92 Bulletin 92/28

(51) Int. Cl.⁵ : **F02B 19/16**

(21) Numéro de dépôt : **89121621.0**

(22) Date de dépôt : **23.12.86**

(54) **Préchambre de combustion à isolation thermique variable.**

(30) Priorité : **30.12.85 FR 8519538**

(43) Date de publication de la demande :
**13.06.90 Bulletin 90/24**

(60) Numéro de publication de la demande initiale
en application de l'article 76 CBE : **0 229 568**

(45) Mention de la délivrance du brevet :
**08.07.92 Bulletin 92/28**

(84) Etats contractants désignés :
**DE ES GB IT**

(56) Documents cités :
**DE-C- 544 508
FR-A- 2 380 422
GB-A- 964 783
US-A- 4 221 195**

(73) Titulaire : **INSTITUT FRANCAIS DU PETROLE
4, Avenue de Bois Préau
F-92502 Rueil-Malmaison (FR)**

(72) Inventeur : **Crestois, Laurent
7, rue Charles Gounot
F-92500 Rueil Malmaison (FR)**
Inventeur : **Herrier, Dominique
10/12, rue Masséna
F-92500 Rueil Malmaison (FR)**

(74) Mandataire : **Andreeff, François et al
INSTITUT FRANCAIS DU PETROLE 4, avenue
de Bois-Préau
F-92502 Rueil-Malmaison (FR)**

## Description

La présente invention concerne les moteurs à combustion interne à préchambre. Le dispositif permet de faire varier le niveau d'isolation thermique de la préchambre de combustion en fonction de la charge du moteur.

Un tel dispositif autorise l'utilisation d'une préchambre de combustion à forte isolation thermique pour les faibles charges de fonctionnement du moteur. L'accroissement de l'isolation thermique de la préchambre s'accompagne d'une amélioration substantielle du rendement thermodynamique du moteur. Ceci reste vrai pour les fortes charges de fonctionnement mais les polluants tels que des oxydes d'azote et fumées s'accroissent. L'augmentation des polluants est due à l'élévation des températures de paroi de la préchambre avec la charge et à une chute progressive du remplissage en air de cette préchambre. Il apparaît donc nécessaire à forte charge de refroidir la préchambre de combustion en réduisant son niveau d'isolation thermique initial.

Les moteurs à combustion interne à préchambre sont généralement équipés de préchambres de combustion fixées dans la culasse. Celles-ci ne sont généralement pas isolées sur le plan thermique et leur état est figé quel que soit le type de fonctionnement du moteur. En particulier, leur résistance thermique est constante.

Le dispositif selon l'invention permet de remédier à cet inconvénient. Il comporte, en effet, une préchambre de combustion présentant un niveau d'isolation élevé. Celui-ci est obtenu au moyen d'une lame d'air ménagée entre la paroi externe de la préchambre et la paroi de culasse. l'abaissement du niveau d'isolation thermique de cette préchambre avec les fortes charges de fonctionnement est obtenu en modifiant la conductibilité thermique de la lame d'air.

L'art antérieur peut être illustré par les brevets DE-C-544.508, GB-A-964.783 et US-A-4.221.195.

La présente invention fournit plus particulièrement une préchambre de combustion logée dans une culasse d'un moteur à combustion interne, cette préchambre comporte une paroi externe et est isolée thermiquement sur une fraction au moins de sa paroi externe par une lame de gaz. Cette préchambre comporte des moyens adaptés à faire varier son niveau d'isolation thermique.

Ces moyens sont caractérisés en ce qu'ils comportent au moins un bilame qui pourra être fixé sur la paroi externe de ladite préchambre.

La préchambre selon la présente invention pourra comporter plusieurs bilames, au moins deux de ces bilames pourront posséder des caractéristiques thermiques ou géométriques différentes permettant une certaine progressivité à la variation de l'isolation thermique.

La présente invention sera mieux comprise et ses avantages apparaitront plus clairement à la description qui suit d'exemples particulièrs illustrés par les figures à annexées parmi lesquelles :

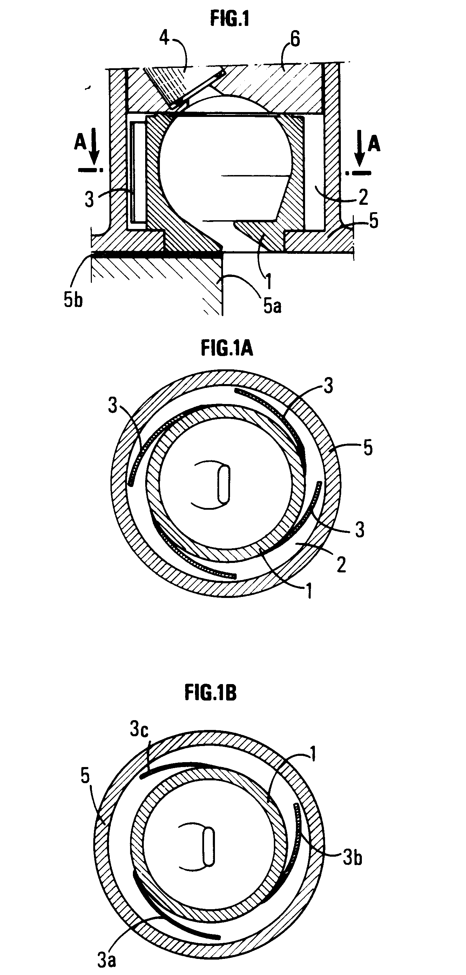

- les figures 1, 1a, 1b représentent un mode de réalisation comportant au moins un bilame,

La figure 1 représente, en coupe, le dispositif selon l'invention. Il comporte une préchambre de combustion 1 du type RICARDO mais l'invention s'applique à tout type de préchambre. La préchambre de combustion est logée dans la culasse 5 et une lame d'air 2 est ménagée autour de cette préchambre. La référence 5a désigne un cylindre du moteur et la référence 5b le joint de culasse de ce moteur.

L'injecteur de combustible 4 est monté sur une pièce 6 qui permet le maintien en position de la préchambre. Autour de la paroi externe de la préchambre est rapporté de préférence de façon régulière un certain nombre de bilames 3. Lorsque la charge du moteur augmente, la température de la paroi de la préchambre s'élève ainsi que celle des bilames.

Sur la figure 1a les bilames sont disposés de façon à ce qu'à partir d'un certain niveau de température leur extrémité libre vienne en contact avec la paroi de la culasse. A ce moment, un pont thermique est établi ce qui entraîne une chute de la résistance thermique de la préchambre. Pour assurer à ce dispositif une certaine progressivité, on peut utiliser des bilames de caractéristiques thermiques différentes qui agiront à des niveaux de température échelonnés. On peut également prévoir des espaces différents entre les extrémités des bilame 3a, 3b et la paroi ou prévoir des longueurs de bilame différentes 3b, 3c (figure 1B).

Un tel mode de réalisation permet d'avoir une variation progressive du niveau d'isolation thermique de la chambre sans pour autant induire des contraintes mécaniques importantes dans la culasse.

## Revendications

1. Préchambre de combustion (1) logée dans une culasse (5) d'un moteur à combustion interne, ladite préchambre comportant une paroi externe et étant isolée thermiquement sur une fraction au moins de ladite paroi externe par une lame de gaz (2), ladite préchambre comportant en outre des moyens adaptés à faire varier le niveau d'isolation thermique de ladite préchambre, caractérisée en ce que lesdits moyens comportent au moins un bilame (3) disposé dans la lame de gaz (2) de façon à ce qu'à partir d'un certain niveau de température le bilame établisse une connexion formant un pont thermique entre la préchambre et la culasse.

2. Préchambre selon la revendication 1, caractérisée en ce que ledit bilame est fixé sur la paroi externe de ladite préchambre.

3. Préchambre selon l'une des revendications 1 à 2, comportant plusieurs bilames, caractérisée en ce que au moins deux desdits bilames possèdent des caractéristiques thermiques ou géométriques différentes permettant une certaine progressivité à la variation de l'isolation thermique.

**Claims**

1. Combustion antechamber (11) housed in a cylinder head (5) of an internal combustion engine, the said antechamber having an external wall and being thermally insulated over at least part of the said external wall by a layer of gas (2), the said antechamber also having means suitable for varying the level of thermal insulation of the said antechamber, characterised in that the said means include at least one bimetallic strip (3) arranged in the layer of gas (2) so that as from a certain temperature level the bimetallic strip establishes a connection forming a thermal bridge between the antechamber and cylinder head.

2. Antechamber according to claim 1, characterised in that the said bimetallic strip is fixed to the external wall of the said antechamber.

3. Antechamber according to one of claims 1 to 2, having several bimetallic strips, characterising that at least two of the said bimetallic strips have different thermal or geometric characteristics allowing a certain progressiveness in the variation of the thermal insulation.

**Patentansprüche**

1. Vorverbrennungskammer (1), die in einem Zylinderdeckel (5) einer Brennkraftmaschine gelagert ist, wobei diese Vorkammer eine Außenwand umfaßt und thermisch wenigstens über einen Teil dieser Außenwand durch eine Gasfeder (2) isoliert ist, wobei die Vorkammer im übrigen Mittel umfaßt, die so ausgebildet sind, daß sie das thermische Isolationsniveau dieser Vorkammer variieren lassen, dadurch gekennzeichnet, daß diese Mittel wenigstens ein Bimetall (3) umfassen, das in der Blattfeder (2) derart angeordnet ist, daß ausgehend von einem gewissen Temperaturniveau das Bimetall eine Verbindung herstellt, die eine thermische Brücke zwischen der Vorkammer und dem Zylinderdeckel bildet.

2. Vorkammer nach Anspruch 1, dadurch gekennzeichnet, daß dieses Bimetall an der Außenwand dieser Vorkammer befestigt ist.

3. Vorkammer nach einem der Ansprüche 1 bis 2 mit mehreren Bimetallausbildungen, dadurch gekennzeichnet, daß wenigstens zwei dieser Bimetallausbildungen thermische oder geometrische unterschiedliche Eigenschaften besitzen, die eine gewisse Progressivität bei der Variation der Wärmeisolierung erlauben.

**FIG.1**

**FIG.1A**

**FIG.1B**